(19) Europäisches Patentamt / European Patent Office / Office européen des brevets

(11) **EP 3 107 071 B1**

## (12) EUROPEAN PATENT SPECIFICATION

(45) Date of publication and mention
of the grant of the patent:
**28.02.2018  Bulletin 2018/09**

(51) Int Cl.:
***G06T 11/60*** *(2006.01)*

(21) Application number: **15172259.2**

(22) Date of filing: **16.06.2015**

(54) **LAYING OUT AN ELECTRONIC DOCUMENT**

ANORDNEN EINES ELEKTRONISCHEN DOKUMENTS

MISE EN PAGE D'UN DOCUMENT ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.12.2016  Bulletin 2016/51**

(73) Proprietor: **BRANDAD Systems AG
90762 Fürth (DE)**

(72) Inventors:
• **Simon, Ansgar
97252 Frickenhausen a. Main (DE)**
• **Teichman, Bodo
90763 Fürth (DE)**

(74) Representative: **Grünecker Patent- und
Rechtsanwälte
PartG mbB
Leopoldstraße 4
80802 München (DE)**

(56) References cited:
**WO-A1-2012/001625     US-B1- 7 908 284**

• **Anonymous: "Scale a 2D polygon in C#", , 12
April 2008 (2008-04-12), pages 1-7, XP055231440,
Retrieved from the Internet:
URL:http://www.experts-exchange.com/questi
ons/23317164/Scale-a-2D-polygon-in-C.html
[retrieved on 2015-11-26]**
• **"Photoshop TM 6 for Windows TM Bible, Chapter
2: Inside Photoshop ED - Deke McClelland", 1
January 2001 (2001-01-01), PHOTOSHOP TM 6
FOR WINDOWS TM BIBLE, IDG BOOKS
WORLDWIDE, INC, FOSTER CITY, CA, PAGE(S)
39 - 43, XP002660527, ISBN: 0-7645-3491-2 * page
40 - page 41 ***

**Description**

BACKGROUND OF THE INVENTION

1. FIELD OF THE INVENTION

The invention generally relates to the automatic generation of electronic documents and, more particularly, to the layout of objects within an electronic document.

2. DESCRIPTION OF THE RELATED ART

Nowadays, page layout for both printed and electronic documents is mostly done on a computer device. Generally, an electronic document may comprise several objects. An object may, for instance, be an image, such as a foreground image or a background image, or text. The arrangement of the objects in relation to each other is referred to as layout. Sometimes, the arrangement of the objects in relation to each other on a page is referred to as page layout and the arrangement of the objects in relation to each other in a document is referred to as document layout. There may be two different groups of objects: a first group of objects, such as background images, can at least partially be obscured by other objects, such as text. However, a second group of objects, such as text objects or foreground images, shall not be obscured by other objects.

The art of laying out a document comprises arranging objects within the electronic document to optimally use the available space within the electronic document without obscuring objects which should be entirely visible. In order to use the available space within an electronic document efficiently, some objects may be scaled to adapt the size of the object to the available space. Further, positions of the objects within the electronic document may be shifted.

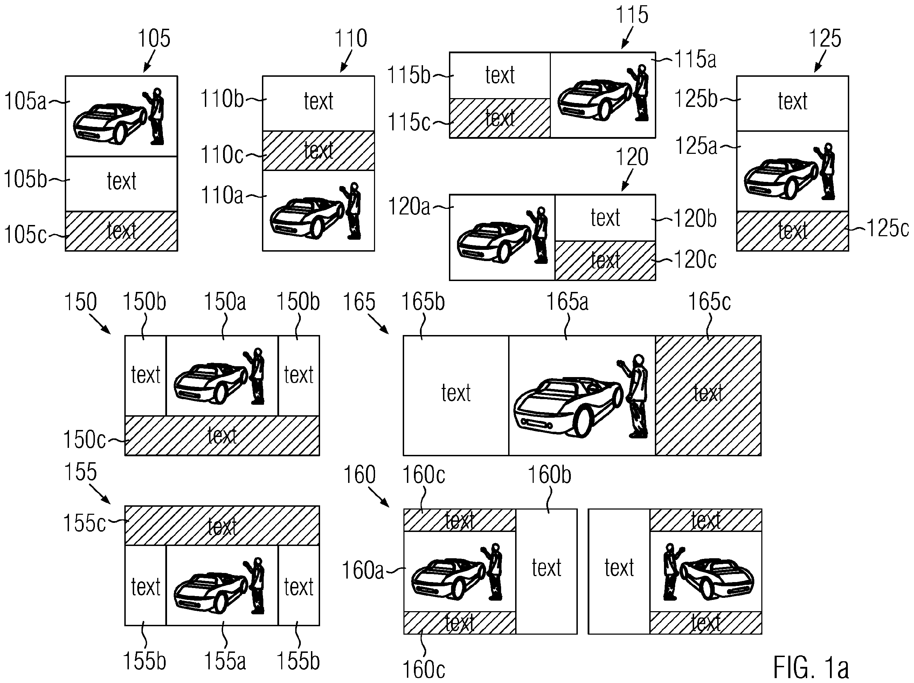

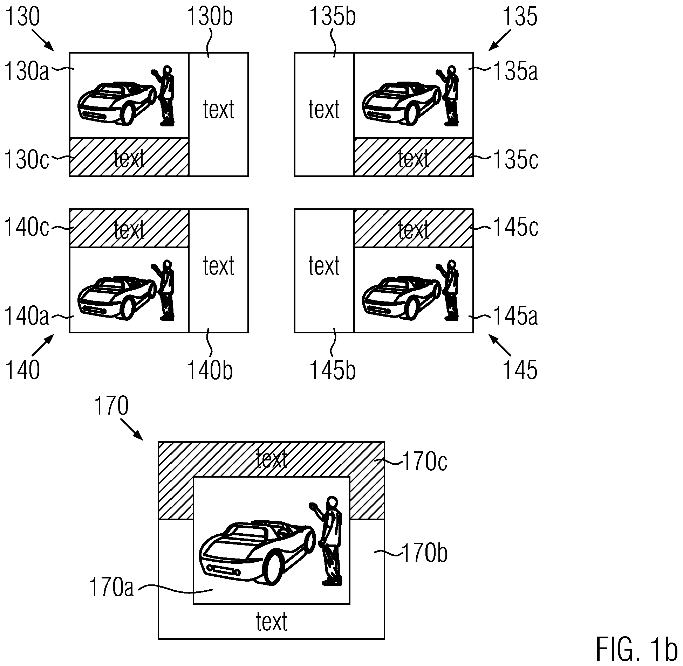

Referring to Figures 1a and 1b, there are several possibilities of laying out an electronic document 105, 110, 115, 120, 125, 130, 135, 145, 150, 155, 160, 165 and 170 comprising both images 105a to 170a and text 105b to 170b and 105c to 170c. In the examples given in Figures 1a and 1b, each exemplary electronic document 105 to 170 comprises two text portions 105b to 170b and 105c to 170c which may be differently formatted and one image portion 105a to 170a. Of course, there may be more than two differently formatted text portions and more than one image portion per electronic document. However for illustration purposes those arrangements are discussed in the following.

For instance, electronic document 105 comprises an image 105a which has the same width as the text portions 105b and 105c. In addition, text portions 105b and 105c are arranged below the image portion 105a. In other examples, the width and the height of the image may differ from the widths and the heights of the text portions and the image may be surrounded or placed anywhere within the electronic document with regard to the text portions as indicated by the arrangements of the image portions 105a to 170a in relation to the text portions 105b to 170b and 105c to 170c of electronic documents 105 to 170.

One common problem of laying out an electronic document is to insert an object such as an image at a given position, i.e. into a viewport, in an electronic document comprising text. The viewport within the electronic document is a placeholder within the electronic document for an object such as an image to be inserted. An electronic document with a viewport in which no object has been inserted yet may also be referred to as template electronic document in the context of the present application.

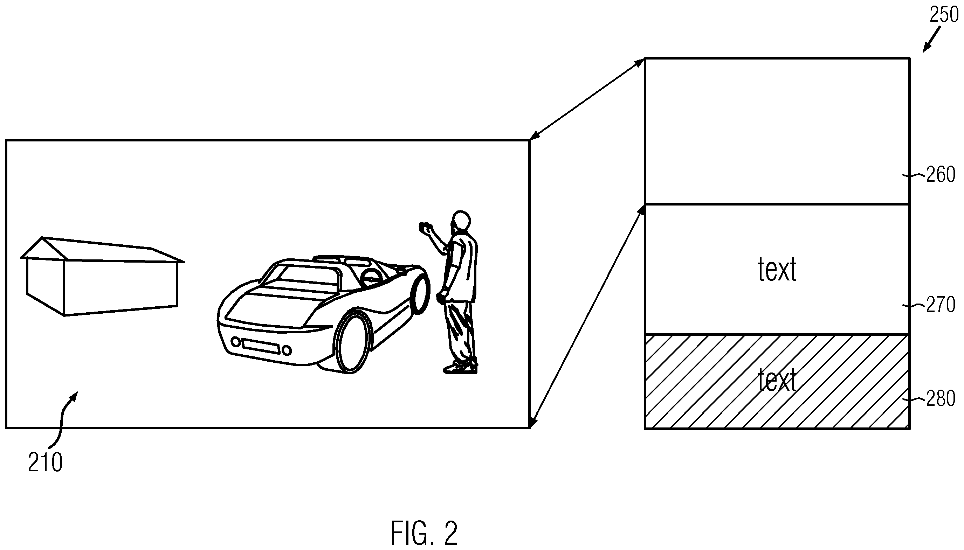

Discussing the generation of an electronic document, such as electronic documents 105 to 170, and referring to Figure 2, an electronic document may have been generated from a template electronic document 250 by inserting an image 210 into a viewport 260 of the template electronic document 250. In detail, as apparent from Figure 2, the viewport 260 is part of the electronic template document 250 which comprises two differently formatted text portions 270 and 280. As mentioned above, the viewport 260 is a placeholder in the template electronic document 250 for an object such as the image 210 to be inserted. While portions 270 and 280 are described as text portions in the following, it is appreciated by the skilled person that portions 270 and 280 may be any two dimensional object such as an image or text combined with an image. Further, the skilled person will appreciated that there might be any number of portions 270 and 280.

The width and/or the height of the image 210 may differ from the width and the height of the viewport 260. Accordingly, when inserting the image 210 into the viewport 260 of the template electronic document 250, the size of the image 210 may either be adapted to the size of the viewport 260 or the size of the viewport 260 may be adapted to the size of the image 210.

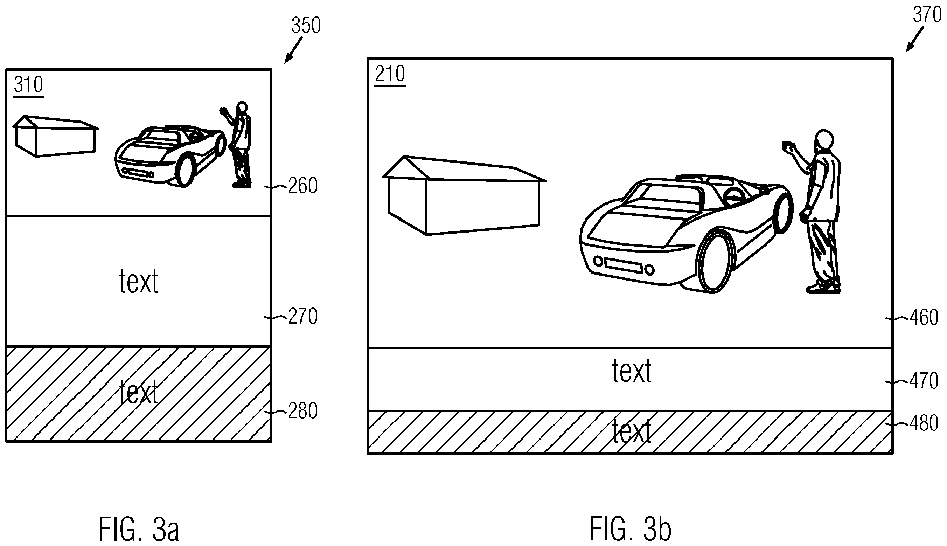

A conventional way of inserting the image 210 into the viewport 260, and referring to Figure 3a, is to scale the image 210 so that at least one dimension (e.g. the width or the height) of the scaled image equals at least one dimension (e.g. the width or the height) of the viewport 260. For instance, the image 210 may be scaled so that the width of the scaled image 310 equals the width of the viewport 260. Thereafter, the image may be inserted into the viewport 260 to result in the electronic document 350 shown in Figure 3a.

The calculation of the dimensions, i.e. the width and the height, of the image 310 is very simple. For instance, to determine a scaling factor, the ratio between one dimension of the image 210 (e.g. width or height) and one dimension of the viewport 260 (e.g. width or height) is calculated. The image 210 is then scaled to image 310 by the determined scaling factor so that at least one dimension (height or width) of the scaled image 310 equals at least one dimension (height or width) of the viewport 260. If the other dimension of the scaled image 310 does not equal the other dimension of the viewport 260, the image 310 may be cut to fit into the viewport 260 or the other dimension of the viewport 260 may be adapted to the other, non-fitting, dimension of the scaled image.

An advantage of this technique is that the layout of the template electronic document 250 needs not to be substantially amended. Therefore, there is no need for a sophisticated programming adapting the layout (e.g. the dimensions) of the template electronic document 250. However, if the image 210 needs to be scaled up, the quality of the scaled image 310 might be less than the quality of the image 210. If the image 210 needs to be scaled down, important parts of the scaled image 310 might not attract attention or might not even be visible any more as those parts are too small in the scaled image 310 to be recognized. Further, if the image 210 comprises less important parts, like background (such as sky or trees), which are not necessary to be seen in the final electronic document 350, those parts are scaled in the same manner as the important parts of the image 210.

Another technique to insert an image 210 into a viewport 260 of a template electronic document 250, and now referring to Figure 3b, is to adapt at least one dimension (e.g. width or height) of the viewport 260 of the template electronic document 250 to at least one dimension (e.g. width or height) of the image 210 in order to generate a scaled viewport 460. For example, the width of the viewport 260 of the template electronic document 250 may be adapted to the width of the image 210. By amending the width of the viewport 260, the dimensions (e.g. width and height) of the other parts of the template electronic document 250 may need to be amended as well. For instance, both the width and the height of each text portion 270 and 280 may be amended to result in the text portions 470 and 480 of Figure 3b.

The advantage of this technique is that the image 210 needs not to be amended and that therefore there is no decrease in the quality of the image 210. However, the dimensions of the template electronic document 250 need to be amended depending on the dimensions of the image 210. Therefore, sophisticated programming adapting parts of the template electronic document to the image is necessary.

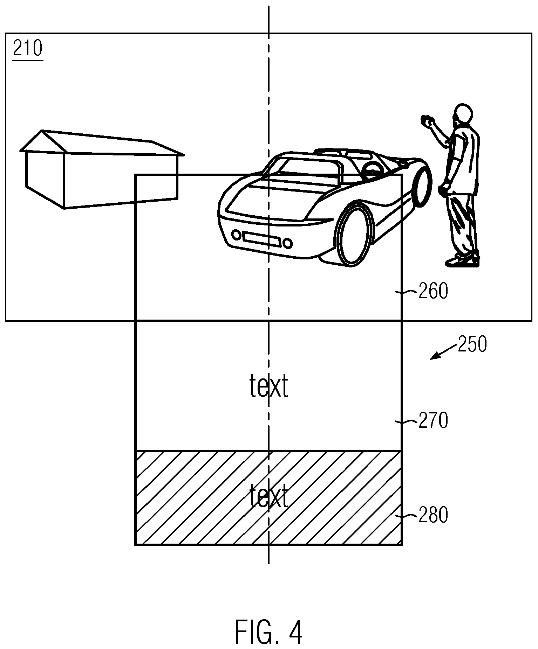

Yet another conventional technique to insert an image 210 into a viewport 260 of a template electronic document 250, and referring now to Figure 4, is to maintain the dimensions of both the viewport 260 of the template electronic document 250 and the image 210 and to place the image 210 in the viewport 260 in a particular way. For example, as shown in Figure 4, the image 210 and the viewport 260 of the template electronic document 250 may be positioned horizontally centered to each other, wherein the lower border of the image 210 and the lower border of the viewport 260 coincide as far as possible.

The advantage of this technique is that no sophisticated programming is necessary neither to scale the image 210 nor to adapt the template electronic document 250. However, important parts of the image 210 may be outside the viewport 260 and thus not be visible in the final electronic document as image content outside the viewport 260 might be cut off.

US 7 908 284 B1 describes a user interface that includes a display area for displaying a content reference page. A content reference page is generated that includes information related to content. The content reference page includes sections for presenting keywords found in the content, reviews of the content, portions of content that are of interest to a user, and other useful references.

Summary of the Invention

Accordingly, it is the object of the present invention to provide a technique for adjusting an image within a viewport of an electronic document. This object is solved by the subject matter of the independent claims. Preferred embodiments are defined by the dependent claims.

In particular, according to an embodiment of the present invention, a computer-implemented method, a computer-readable medium having computer-executable instructions that, when executed on the computer, cause the computer to perform the computer-implemented method and a system adapted to perform the computer-implemented method are provided.

BRIEF DESCRIPTION OF THE INVENTION

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:

Figures 1a and 1b illustrate examples of how to place an image with respect to text portions within an electronic document;

Figure 2 illustrates the structure of a template electronic document having a viewport before inserting an image;

Figures 3a and 3b illustrate conventional techniques for inserting an image into a viewport of a template electronic document;

Figure 4 illustrates a conventional technique for inserting an image into a viewport of a template electronic document;

Figure 5 is a flowchart illustrating a process for inserting an image into a viewport of a template electronic document and adjusting the image within the viewport of the electronic document according to an embodiment of the invention;

Figures 6 to 15 illustrate an adjustment of an image within a viewport of an electronic document according to an embodiment of the invention; and

Figure 16 illustrates the placement of text elements within an image of an electronic document according to an embodiment.

DETAILED DESCRIPTION OF THE INVENTION

The illustrative embodiments of the present invention will be described with reference to the Figure drawings wherein like elements and structures are indicated by like reference numbers.

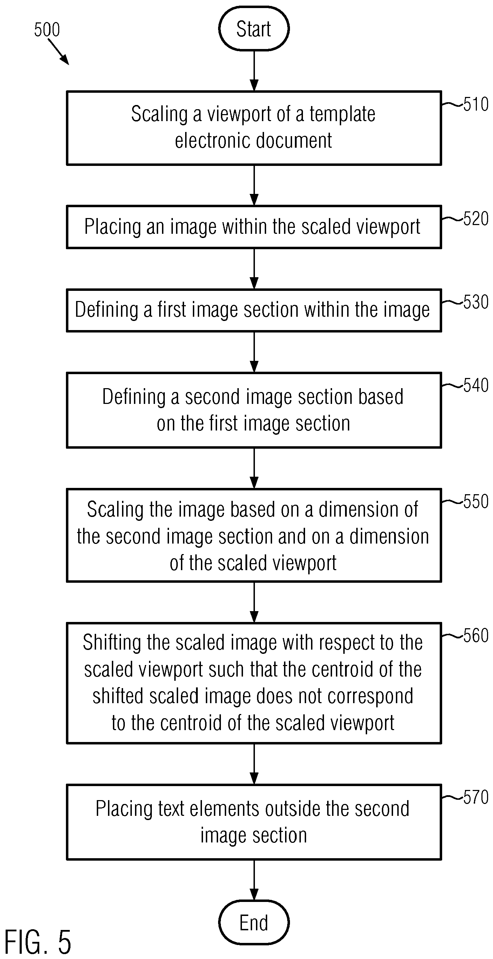

The present invention may be implemented as a computer-implemented method, a computer-readable medium having computer-executable instructions that, when executed on a computer, cause the computer to perform the computer-readable method or a system adapted to perform the computer-implemented method. Specifically, the computer-implemented method will be described with reference to Figures 5 to 15.

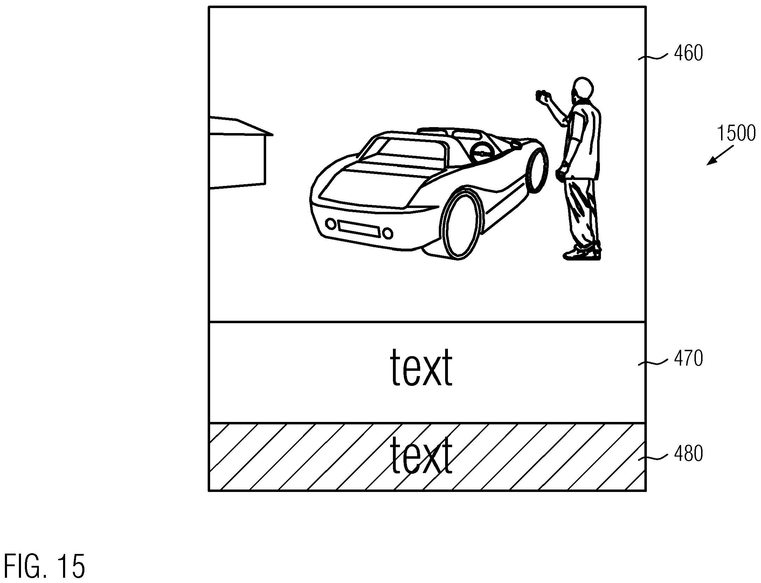

Referring now to Figure 5, a computer-implemented method for generating an electronic document such as document 1500 of Figure 15 from a template electronic document such as document 250 of Figure 2 having a viewport such as viewport 260 of Figure 2 by inserting an image such as image 210 of Figure 2 into the viewport of the template electronic document and adjusting the image within the viewport of the electronic document is described.

Generally, steps 510 and 520 relate to inserting an object such as the image 210 into a viewport of a template electronic document. Those steps may be performed as described with reference to Figures 2 to 4. Steps 530 to 560 relate to the adjustment of the inserted object within the viewport of the electronic document to provide an optimally positioned object within the electronic document. Finally, optional step 570 relates to the placement of text within the viewport of the electronic document.

For illustration purposes, steps 510 and 520 will now be described for a rectangular image to be inserted into a rectangular viewport of a rectangular template electronic document. Similarly, steps 530 to 560 will now be described for a rectangular image to be adjusted within a rectangular viewport of a rectangular electronic document. As mentioned above, an electronic document having a viewport in which no object has been inserted yet is also referred to as template electronic document. Of course, the person skilled in the art will appreciate that the image, the viewport and the electronic document need not to be of rectangular shape, but may have a different shape such as a circular shape, an elliptic shape, a triangular shape etc.

In particular, at step 510, an image 210 is inserted into a viewport 260 of a template electronic document 250. The template electronic document 250 may comprise an empty viewport 260 and several text portions 270 and 280 having different layouts. The viewport 260 is a placeholder for an object, such as image 210, to be inserted.

There may be any number of differently formatted text portions which may be positioned in any relation to the viewport 260 and to each other. For instance, the text portions may be positioned with regard to a viewport and with regard to each other as illustrated in Figures 1a and 1b, wherein the areas 105a, 110a, 115a, 120a, 125a, 130a, 135a, 140a, 145a, 150a, 155a, 160a, 165a and 170a may be considered as a viewport in electronic documents 105 to 170. However, for illustrational purposes, it will be referred in the following to the arrangement of Figure 2.

At step 510, the viewport 260 of the template electronic document 250 may be scaled so that at least one dimension of the viewport 260 equals at least one dimension of the object, such as image 210, to be inserted. Accordingly, for a two-dimensional viewport and a two-dimensional object to be inserted, one dimension of the scaled viewport 460 corresponds to one dimension of the object to be inserted. If the second dimension of the scaled viewport 460 does not equal the second dimension of the object to be inserted, the second dimension of the scaled viewport 460 may be adapted to the second dimension of the object to be inserted.

In the context of this application, a dimension of an object, such as the image 210, the viewport 260 or the template electronic document 250, may be a length of the object in a direction. For instance, a dimension of a rectangular image may be the height or the width of the image. Similarly, the dimension of a rectangular viewport may be the height or the width of the viewport.

The scaling factor for scaling the viewport 260 may depend on the format of the image 210 and the format of the viewport 260. In the context of the present application, the format may be either the landscape format or the portrait format. For instance, in Figure 2, both the image 210 and the viewport 260 of the template electronic document 250 are in the landscape format. In this example, and additionally referring to Figure 3b, the viewport 260 is scaled by a scaling factor which may be the ratio of the width of the image 210 to the width of the viewport 260. Subsequently, the width of the text portions 270 and 280 may be adapted to the width of the scaled viewport 460 and the heights of the text portions 270 and 280 may be determined based on the text inside the text portions 270 and 280 to result in text portions 470 and 480. For instance, the font size of the text inside the text portions 270 and 280 may correspond to the font size of the text inside text portions 470 and 480. Accordingly, if the width of the image 210 is greater than the width of the not scaled viewport 260, the width of the text portions 470 and 480 will likewise be greater than the width of the text portions 270 and 280. Thus, the heights of the text portions 470 and 480 which are dependent on the text inside each portion may be smaller than the heights of text portions 270 and 280, respectively.

If necessary, the height of the scaled viewport 460 may be adapted to equal the height of the image 210.

According to an alternative embodiment and also referring to Figure 3a, the image 210 may be scaled at step 510 so that at least one dimension of the scaled image 310 equals at least one dimension of the viewport 260 of the template electronic document 250. Accordingly, for a two-dimensional viewport and a two-dimensional object to be inserted, one dimension of the viewport corresponds to one dimension of the scaled image to be inserted. If the second dimension of the viewport does not equal the second dimension of the scaled image to be inserted, the second dimension of the viewport may be adapted to the second dimension of the scaled image.

In this embodiment, the scaling of the image 210 may also depend on the formats of the viewport 260 and the image 210. For instance, and still referring to Figure 3a, if both the image 210 and the viewport 260 are in the landscape format, the image may be scaled by a scaling factor so that the width of the scaled image 310 corresponds to the width of the viewport 260. Accordingly, the scaling factor may be a ratio of the width of the viewport 260 to the width of the image 210.

In yet other embodiments, neither the viewport nor the object to be inserted are scaled and the object is inserted at step 520 into the viewport 260 as described with reference to Figure 4.

At step 520, and referring additionally to Figure 3b, for embodiments where the viewport 260 has been scaled at step 510, the image 210 is placed within the scaled viewport 460 of the electronic document 370. Similarly, for embodiments where the image 210 has been scaled at step 510, and referring to Figure 3a, the scaled image 310 is placed within the viewport 260 of the template electronic document 250 to result in electronic document 350.

In the following, embodiments are discussed where the viewport 260 has been scaled at step 510. However, all the discussed steps apply to embodiments where the image 210 has been scaled at step 510, if "scaled viewport 460" is replaced with "viewport 260" and "image 210" is replaced with "scaled image 310". Similarly, all the discussed steps apply to embodiments where neither the viewport 260 nor the image 210 has been scaled at 510, if "scaled viewport 460" is replaced with "viewport 260".

Accordingly, as explained with regard to step 510, and referring also to Figure 3b, at least one dimension of the scaled viewport 460 equals at least one dimension of the image 210. Therefore, the image 210 is placed within the scaled viewport 460 to minimize parts of the image 210 being outside the scaled viewport 460. If the other dimension of the scaled viewport 460 has been adapted to the other dimension of the image 210, too, then the image 210 is placed within the scaled viewport 460 so that the image 210 lies completely within the scaled viewport 460.

For instance, for a rectangular image and a rectangular scaled viewport which has the same width as the image 210, the image 210 may be placed inside the scaled viewport 460 horizontally centered as shown in Figure 3b. Further, as apparent from Figure 3b, the image 210 may be placed inside the scaled viewport 460 so that at least one border of the image 210 completely coincides with at least one border of the scaled viewport 460.

After having performed steps 510 and 520, the method proceeds to step 530. The method may also start with step 530. In embodiments, where the method starts with step 530, step 530 is then performed on an electronic document having an object, such as an image, within its viewport. Thus, for those embodiments, steps 530 to 570 described in the following apply, too, if "scaled viewport 460" is replaced with "viewport".

Returning to the embodiment described with regard to Figure 5, at step 530, a first image section within the image 210 is defined. The first image section may be a part of the image 210 which is to be optimally positioned within the scaled viewport 460 as it comprises the most important parts of the image 210 such as the image foreground. Accordingly, the most important image content, such as the image foreground, of image 210 is within the first image section. Image background of image 210 may be outside the first image section.

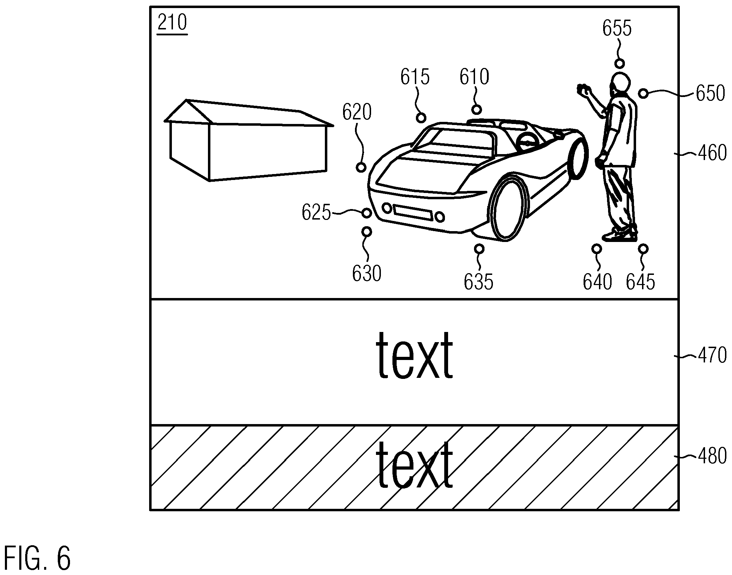

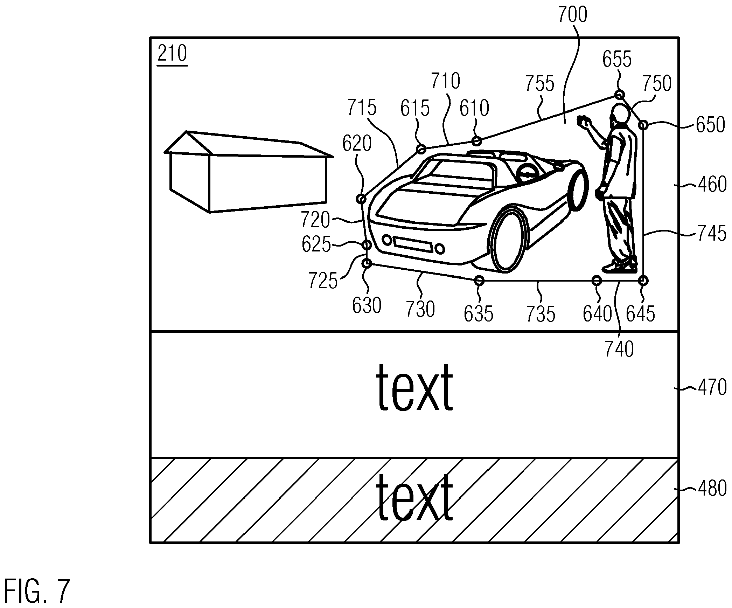

According to an embodiment, the first image section may be an area within a non-self intersecting polygon. Discussing step 530 further with reference to Figures 6 and 7, and referring firstly to Figure 6, three or more points may be selected within the image 210. For instance, points 610, 615, 620, 625, 630, 635, 640, 645, 650 and 655 may be selected within image 210. This may be done, for instance, either by user input or automatically, for instance, by identifying contrast changes within image 210.

In order to further process points 610 to 655, a coordinate system may be defined and the coordinates of each point 610 to 655 may be stored. For instance, a Cartesian coordinate system may be defined which has its origin in one of the corners of the electronic document such as the upper left corner of the electronic document. According to an embodiment, the coordinates of the points 610 to 655 may be stored together with image 210.

The first image section may be an area confined by a non-self intersecting polygon, wherein the vertices of the non-self intersecting polygon are the selected three or more points and the edges of the non-self intersecting polygon are lines connecting the selected three or more points.

For instance, and referring now to Figure 7, points 610, 615, 620, 625, 630, 635, 640, 645, 650 and 655 may have been selected. The first image section may be the area 700 within non-self intersecting polygon having edge 710, connecting points 610 and 615, edge 715, connecting points 615 and 620, edge 720, connecting points 620 and 625, edge 725, connecting points 625 and 630, edge 730, connecting points 630 and 635, edge 735, connecting points 635 and 640, edge 740, connecting points 640 and 645, edge 745, connecting points 645 and 650, edge 750, connecting points 650 and 655, and finally edge 755, connecting points 655 and 610. Those edges 710 to 755 may be stored together with the image as a chain of vectors.

At step 540, a second image section is defined based on the defined first image section 700. The second image section comprises image content of the first image section. The second image section may be an area which must not be obscured by other objects of the electronic document, such as text, and which needs to be within the scaled viewport 460 of the electronic document.

According to an embodiment, step 540 comprises the step of calculating a centroid of the first image section 700 defined in step 530. The centroid of the first image section 700 may be different from a centroid of the image 210 itself.

For instance, in an embodiment where the first image section 700 is a non-self intersecting polygon, the centroid of the first image section 700 may be calculated using a Cartesian coordinate system having the origin in one of the corners such as the upper-left corner of the electronic document. As it is known to a person skilled in the art, for a non-self intersecting polygon defined by $n$ vertices having the coordinates $(x_0, y_0)$, $(x_1, y_1),...,(x_{n-1}, y_{n-1})$, the centroid of the non-self intersecting polygon is the point $(C_x, C_y)$ where

$$C_x = \frac{1}{6A} \sum_{i=0}^{n-1} (x_i + x_{i+1})(x_i y_{i+1} - x_{i+1} y_i)$$

$$C_y = \frac{1}{6A} \sum_{i=0}^{n-1} (y_i + y_{i+1})(x_i y_{i+1} - x_{i+1} y_i)$$

and where A is the polygon's signed area,

$$A = \frac{1}{2} \sum_{i=0}^{n-1} (x_i y_{i+1} - x_{i+1} y_i).$$

In the above formulas, the vertices are assumed to be numbered in order of their occurrence along the polygon's perimeter, and the vertex$(x_n, y_n)$ is assumed to be the same as $(x_0, y_0)$.

Thereafter, for each vertex of the non-self intersecting polygon defining the first image section 700, a vector from the calculated centroid of the non-self intersecting polygon to the vertex is calculated. Specifically, for a given vertex, the terminal point of the calculated vector is the given vertex and the initial point (also referred to as origin) is the centroid of the first image section 700.

In order to define the second image section, for each calculated vector an elongated vector associated with this calculated vector is defined. The second image section may then be the area confined by a non-self intersecting polygon, wherein the vertices of the non-self intersecting polygon are the terminal points of the elongated vectors and the edges of the non-self intersecting polygon are lines connecting the vertices. Thus, a second non-self intersecting polygon is constructed, wherein locations of vertices of the second non-self intersecting polygon correspond to locations of terminal points of the elongated vectors.

Specifically, for a given calculated vector, the elongated vector associated with this given calculated vector has the same direction and the same initial point (i.e. origin) as the given calculated vector. However, the length of the elongated vector associated with the given calculated vector is greater than the length of the given calculated vector.

According to embodiments, the length of a given elongated vector is defined by adding a constant length value to the length of the calculated vector associated with the given elongated vector. The constant length value may, for instance, be determined based on the print space of the electronic document. The length value may be the same for each calculated vector.

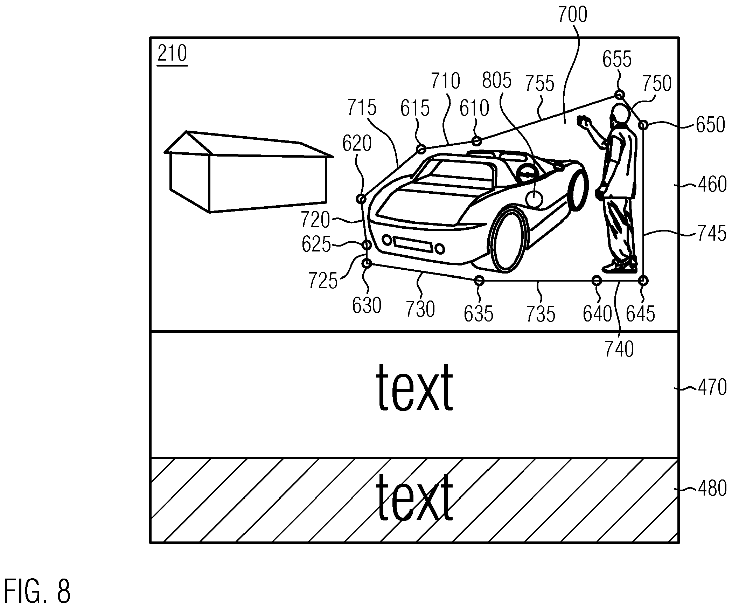

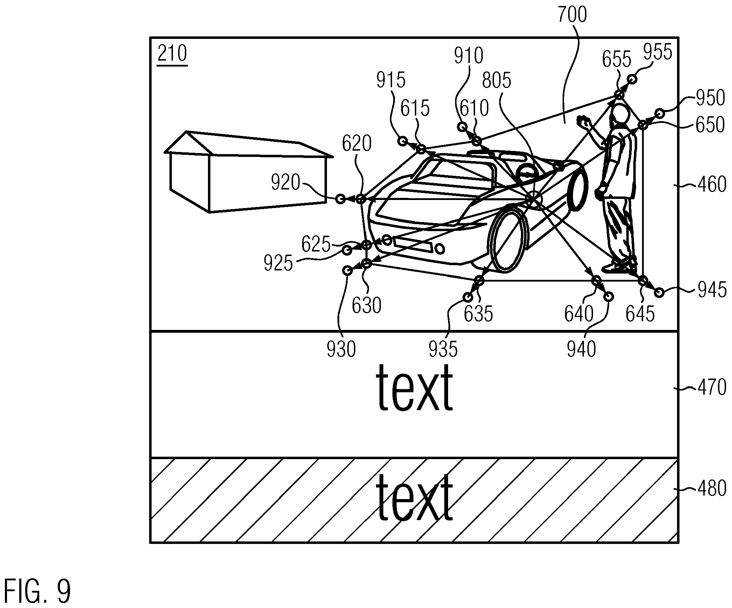

Discussing step 540 on an example and referring to Figure 8, point 805 may be determined to be the centroid of the first image section 700. Thereafter, and referring to Figure 9, for each point 610 to 655, a vector from the calculated centroid 805 of the first image section 700 to the point 610 to 655 is calculated. Accordingly, a vector having its origin in point 805 and its terminal point in 610 is calculated for point 610, a vector having its origin in point 805 and its terminal point in 615 is calculated for point 615, a vector having its origin in point 805 and its terminal point in 620 is calculated for point 620, a vector having its origin in point 805 and its terminal point in 625 is calculated for point 625, a vector having its origin in point 805 and its terminal point in 630 is calculated for point 630, a vector having its origin in point 805 and its terminal point in 635 is calculated for point 635, a vector having its origin in point 805 and its terminal point in 640 is calculated for point 640, a vector having its origin in point 805 and its terminal point in 645 is calculated for point 645, a vector having its origin in point 805 and its terminal point in 650 is calculated for point 650 and a vector having its origin in point 805 and its terminal point in 655 is calculated for point 655.

In order to define the second image section, for each calculated vector an elongated vector associated with this calculated vector is defined. Discussing the definition of the elongated vector associated with the calculated vector having its origin in point 805 and its terminal point in point 610 in more detail, the elongated vector has the same origin in point 805 and the same direction as the calculated vector having its origin in point 805 and its terminal point in point 610. However, the length of the elongated vector is the length of the calculated vector having its origin in point 805 and its terminal point in point 610 plus a length value. Accordingly, the elongated vector has a terminal point 910 different from the terminal point 610 of the calculated vector. The length value added to the length of the calculated vector to arrive at the length of the elongated vector associated with the calculated vector may be the same for each calculated vector. Thus, the length value may be a constant length value which is, for instance, based on the print space of the electronic document.

In the same manner, terminal points 910, 915, 920, 925, 930, 935, 940, 945, 950 and 955 are determined. For instance, for the calculated vector having its origin in point 805 and its terminal point in point 615, an elongated vector is defined having the same origin and the same direction as the calculated vector having its origin in point 805 and its terminal point in point 615, but its terminal point at point 915.

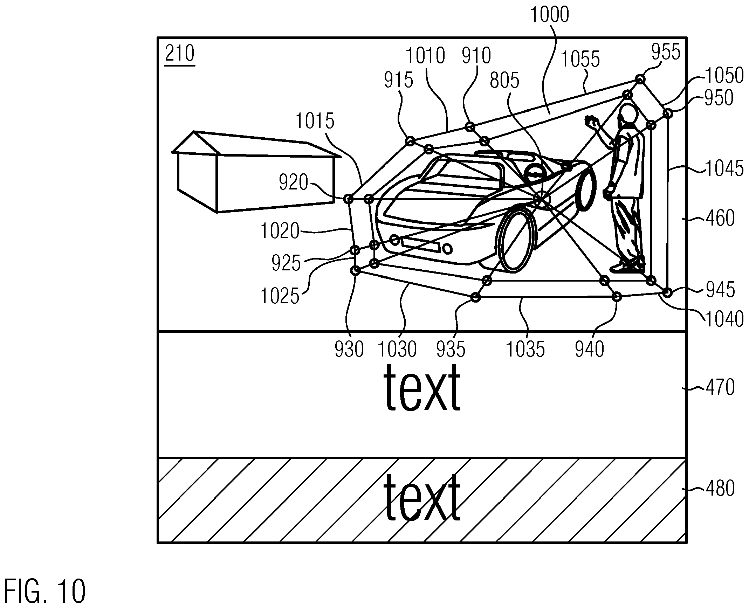

Referring now to Figure 10, in order to define the second image section, points 910 to 955 may be connected by lines 1010 to 1055 to result in a non-self intersecting polygon. The area confined by the non-self intersecting polygon having lines 1010, 1015, 1020, 1025, 1030, 1035, 1040, 1045, 1050 and 1055 as edges and points 910, 915, 920, 925, 930, 935, 940, 945, 950 and 955 as vertices may be the second image section 1000.

At step 550, the image 210 is scaled by a scaling factor, wherein the scaling factor is based on a dimension of the second image section 1000 and on a dimension of the scaled viewport 460. According to an embodiment, the coordinates of the centroid of the image 210 and the coordinates of the centroid of the image scaled at step 550 are identical. Thus, in embodiments, the coordinates of the centroid of the image scaled at step 550 may be the same as the coordinates of the centroid of the scaled viewport 460.

For instance, a dimension of the scaled viewport 460 along a direction perpendicular to a given border of the image 210 is determined. In addition, a dimension of the second image section 1000 along the same direction perpendicular to the given border of the image 210 is determined. If the origin of a Cartesian coordinate system is in a corner of the electronic document and if two borders of a rectangular scaled viewport as well as two borders of a rectangular image are parallel to the axes of the Cartesian coordinate system, a dimension of the second image section 1000 being a non-self intersecting polygon may be, for instance, a width of the second image section 1000, which is a distance given by the maximum difference of the x-coordinates of the vertices of the non-self intersecting polygon. Similarly, a dimension of the second image section 1000 may be a height of the second image section 1000, which is a distance given by a maximum difference of the y-coordinates of the vertices of the non-self intersecting polygon.

The scaling factor may then be a factor *"factor"* multiplied by a ratio of the dimension of the scaled viewport 460 to the dimension of the second image section 1000. The factor *"factor"* may be selected from a predefined interval. According to a first embodiment, the predefined interval may be [0,1]. According to a second embodiment, the interval may be $\left[\dfrac{W_{section}}{W_{image}}, 1\right]$, wherein $W_{section}$ is the width of the second image section 1000 and $W_{image}$ is the width of the image 210.

As explained above, the first image section 700 comprises foreground image content of the image 210. Accordingly, as the first image section 700 lies within the second image section 1000, the foreground content of image 210 is in the second image section 1000, too. To optimally place the foreground content of image 210 within the scaled viewport 460, the image 210 is scaled in step 550 to result in an image scaled at step 550.

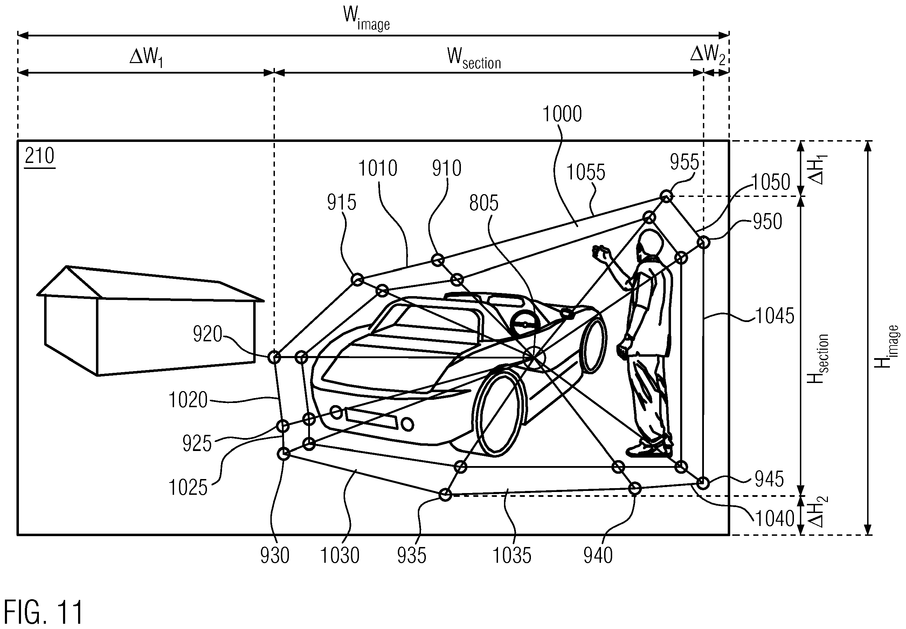

Discussing step 550 in even greater detail and referring to Figures 11 to 13, for a two-dimensional rectangular image 210 and a two-dimensional rectangular scaled viewport 460, wherein at least one border of the rectangular image 210 coincides with at least one border of the scaled viewport 460, there are four different scenarios to be considered, as apparent from the following table:

| | | Scaled Viewport | |
|---|---|---|---|
| | | $W_{viewport} \geq H_{viewport}$ = landscape | $W_{viewport} \leq H_{viewport}$ = portrait |
| Second Image Section | $W_{section} \geq H_{section}$ = landscape | Scenario 1 (Figure 12a) | Scenario 3 (Figure 12c) |
| | $W_{section} \leq H_{section}$ = portrait | Scenario 2 (Figure 12b) | Scenario 4 (Figure 12d) |

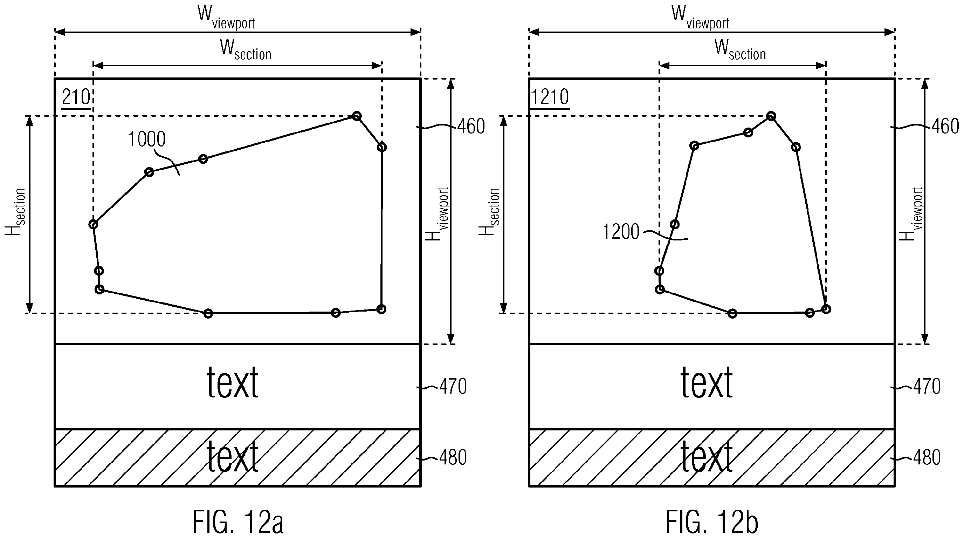

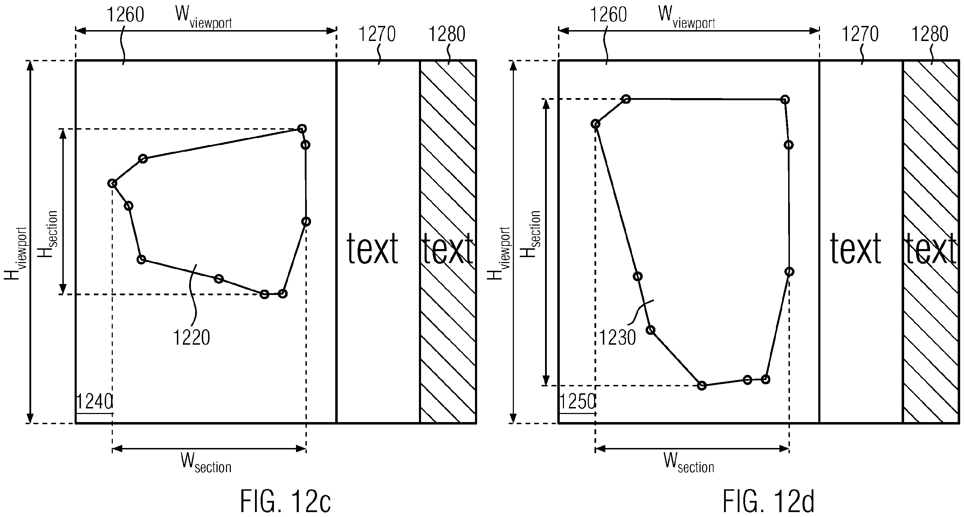

In the table, and referring to Figures 11 and 12, the width of the second image section is $W_{section}$ and the height of the second image section is $H_{section}$. Similarly, the width of the scaled viewport is $W_{viewport}$ and the height of the scaled viewport is $H_{viewport}$.

Accordingly, and referring to Figure 12a, in scenario 1, the scaled viewport 460 and the second image section 1000 are both in landscape format. This scenario has been discussed above with regard to Figures 5 to 11. In scenario 2, and referring to Figure 12b, the scaled viewport 460 is still in landscape format, but the second image section 1200 of the image 1210 is in portrait format. In scenario 3, and referring to Figure 12c, the second image section 1220 of image 1240 is in landscape format and the scaled viewport 1260 is in portrait format. In this embodiment, text portions 1270 and 1280 are in portrait format, too. However, the text portions may be in any format. Finally, in scenario 4, and referring to Figure 12d, the second image section 1230 of image 1250 and the scaled viewport 1260 are both in portrait format.

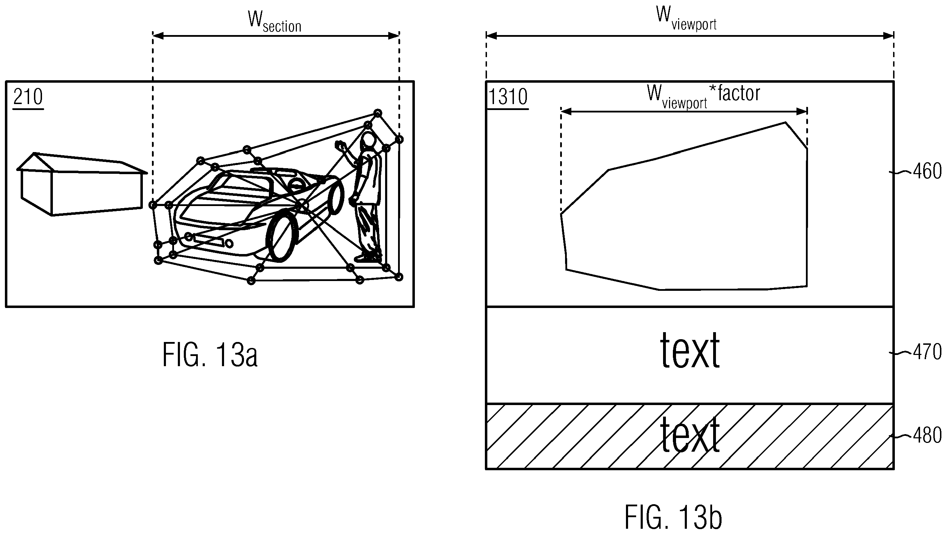

Scenario 1 will now be discussed in more detail for step 550. Referring to Figures 13a and 13b, a factor *"factor"* smaller than or equal to 1 is determined. For instance, the factor is selected by a user. In the above mentioned first embodiment, the factor *"factor"* may be between 0 and 1. Accordingly, for the first embodiment the following holds: $0 \leq factor \leq 1$. In the above mentioned second embodiment, the factor *"factor"* may be between a ratio of the width of the second image section $W_{section}$ to the width of the image 210 $W_{image}$ and 1. Accordingly, for the second embodiment the

following holds: $\frac{W_{section}}{W_{image}} \leq factor \leq 1.$ An advantage of the second embodiment is that there is no empty space between the left/right border of the scaled viewport 460 and the second image section scaled at step 550.

In both, the first and second embodiments described with regard to step 550, the value of the factor *"factor"* may be freely selectable within the allowed interval by a user according to an embodiment. For instance, there may be a user interface element such as a slide bar or a knob via which the user can adjust the factor *"factor"*. When adjusting the factor *"factor"*, the user may see automatically the result of the adjustment: the closer the factor *"factor"* is to 1, the more of the image scaled at 550 lies outside the scaled viewport 460. On the contrary, the closer the factor *"factor"* is to the lower border of the allowed interval, the more of the image scaled at step 550 is within the scaled viewport 460. According to an alternate embodiment, the factor *"factor"* may be preset for both the first and second embodiments described with regard to step 550.

After the determination of the factor *"factor"*, the image 210 is scaled by a scaling factors to arrive at the image 1310 scaled at step 550. As mentioned above, in an embodiment, the coordinates of the centroid of image 210 are the same as the coordinates of the centroid of image 1310 scaled at step 550. Thus, in embodiments, the coordinates of the centroid of the image 1310 scaled at step 550 may be the same as the coordinates of the centroid of the scaled viewport 460. The scaling factor *s* is based on the width of the scaled viewport 460 and the width of the second image section 1000. In an embodiment the scaling factor *s* may be:

$$s = \frac{W_{Viewport}}{W_{section}} \times factor.$$

Accordingly, the second image section 1000 is scaled together with the image 210 by defining a percental value (the factor *"factor"*) of one dimension of the second image section 1000 to one dimension of the scaled viewport 460.

For the other scenarios 2 to 4, the scaling factor *s* may be determined analogously by either replacing the width of the scaled viewport and/or the width of the image with the respective heights or by rotating the electronic document/image by an angle which is an integer multiple of 90° as can be easily derived from Figures 12a to 12d.

Having performed step 550, the size of the second image section has been adapted to be optimal with regard to the size of the scaled viewport 460.

To further improve the layout of the electronic document, step 560 is performed. Specifically, at step 560, the image 1310 scaled at step 550 is repositioned with respect to the scaled viewport 460. According to embodiments, the image 1310 scaled at 550 may be shifted such that the coordinates of the centroid of the image 1310 scaled at step 550 do no longer correspond to the coordinates of the centroid of the scaled viewport 460. For example, the image 1310 scaled at 550 may be repositioned such that the ratio of the minimum distance between the shifted scaled second image section and the left border of the scaled viewport 460 to the minimum distance between the shifted scaled second image section and the right border of the scaled viewport 460 equals the ratio of the minimum distance between the not scaled second image section 1000 and the left border of the not scaled image 210 to the minimum distance between the not scaled second image section 1000 and the right border of the not scaled image 210.

In detail, the image 1310 scaled at step 550 is shifted by a correction distance, wherein the correction distance is based on a distance within the image 1310 scaled at 550. The distance within the image 1310 scaled at 550 may be a distance of the scaled second image section within the image 1310 scaled at 550 to a given border of the image 1310 scaled at 550. The given border of the image 1310 scaled at 550 may be parallel to the given border of the image 210 discussed with reference to step 550. The image 1310 scaled at 550 may then be shifted by the correction distance towards the given border of the image 1310 scaled at 550 for which the distance within the image 1310 scaled at 550 has been calculated.

For instance, for each vertex of the non-self intersecting polygon defining the scaled second image section within the image 1310 scaled at 550, a distance is calculated to the given border of the image 1310 scaled at step 550. The minimum distance calculated is the distance of the scaled second image section within the image 1310 scaled at 550 to the given border of the image 1310 scaled at step 550.

In more detail, to determine the correction distance, a first differential dimension may be calculated. The first differential dimension may be a difference between a dimension of the scaled viewport 460 along a direction perpendicular to the given border of the image 1310 scaled at step 550 and a dimension of the scaled second image section within the image 1310 scaled at 550 along a direction perpendicular to the given border of the image 1310 scaled at step 550. Further, a second differential dimension may be calculated, wherein the second differential dimension is a difference between a dimension of the image 1310 scaled at 550 along the direction perpendicular to the given border of the image 1310 scaled at step 550 and the dimension of the scaled second image section within the image 1310 scaled at 550 along the direction perpendicular to the given border of the image 1310 scaled at step 550. Moreover, a ratio of the first differential dimension to the second differential dimension is determined. Finally, the correction distance is calculated. In particular, the correction distance may be the scaling factor *s* multiplied by the difference between the distance of the scaled second image section within the image 1310 scaled at 550 to the given border of the image 1310 scaled at step 550 and the distance of the scaled second image section within the image 1310 scaled at 550 to the given border of the image 1310 scaled at step 550 multiplied by the ratio of the first differential dimension to the second differential dimension.

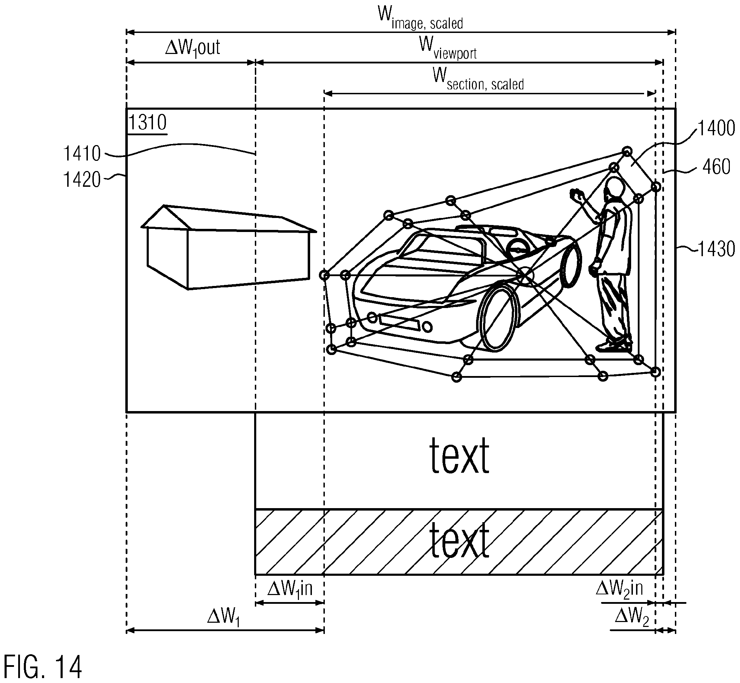

Discussing step 560 for scenario 1 in more detail and referring to Figure 14, the calculation of the correction distance will now be exemplarily described for a minimum distance $\Delta W_1$ calculated from the scaled second image section 1400 within the image 1310 scaled at 550 to a left border 1420 of the image 1310 scaled at 550. The correction distance *corr* may be $\Delta W_1$ *out* multiplied by the scaling factor *s*:

$$corr = \Delta W_1 out \times s.$$

As can be seen from Figure 14, $\Delta W_1$ *out* is the minimum distance from the scaled viewport 460 to the left border 1420 of the image 1310 scaled at 550, i.e. the distance from the left border 1410 of the scaled viewport 460 to the left border 1420 of the image 1310 scaled at 550.

For calculating the minimum distance $\Delta W_1$ *out*, the width $W_{section,scaled}$ of the scaled second image section 1400 within the image 1310 scaled at 550 as well as the width $W_{image,scaled}$ of the image 1310 scaled at 550 is determined. As the scaled viewport 460 has not been scaled in step 550, the width $W_{viewport}$ of the scaled viewport 460 remains unchanged.

Thereafter, a first differential dimension between the width of the scaled viewport 460 and the width of the scaled second image section 1400 within the image 1310 scaled at 550 is calculated. Further, a second differential dimension between the width of the image 1310 scaled at 550 and the width of the scaled second image section 1400 within the image 1310 scaled at 550 is calculated. Then, a ratio R of the first to the second differential dimension is calculated:

$$R = \frac{W_{viewport} - W_{section,scaled}}{W_{image,scaled} - W_{section,scaled}} .$$

As can be seen from Figure 14, the ratio of the distance $\Delta W_1\ in$ ($\Delta W_1\ in$ is the minimum distance from the scaled second image section 1400 within the image 1310 scaled at 550 to the left border 1410 of the scaled viewport 460) to the distance $\Delta W_1$ ($\Delta W_1$ is the minimum distance from the scaled second image section 1400 within the image 1310 scaled at 550 to the left border 1420 of the image 1310 scaled at step 550) equals R, therefore:

$$\Delta W_1 in = \ \Delta W_1 \times R.$$

As can be further seen from Figure 14, the minimum distance $\Delta W_1\ out$ from the scaled viewport 460 to the left border 1420 of the image 1310 scaled at 550 is:

$$\Delta W_1 out = \Delta W_1 - \Delta W_1 in.$$

Therefore, the correction distance *corr* is:

$$corr = (\Delta W_1 - \Delta W_1 \times R) \times s.$$

Accordingly, the image 1310 scaled at 550 is shifted by the correction distance *corr* towards the left border 1420 of the image 1310 scaled at 550.

The result of the method according to steps 510 to 560 can be seen in Figure 15, wherein all parts of the image 1310 scaled at 550 and shifted at 560 which are outside the scaled viewport 460 have been cut off.

Accordingly, an image inserted into a viewport of a template electronic document has been adjusted both in size and position to optimally be placed with regard to the viewport in the electronic document. The most important parts of the image (e.g. the foreground content, i.e. content within the first image section) are visible and not cut off. Furthermore, the overall impression of the image has been maintained.

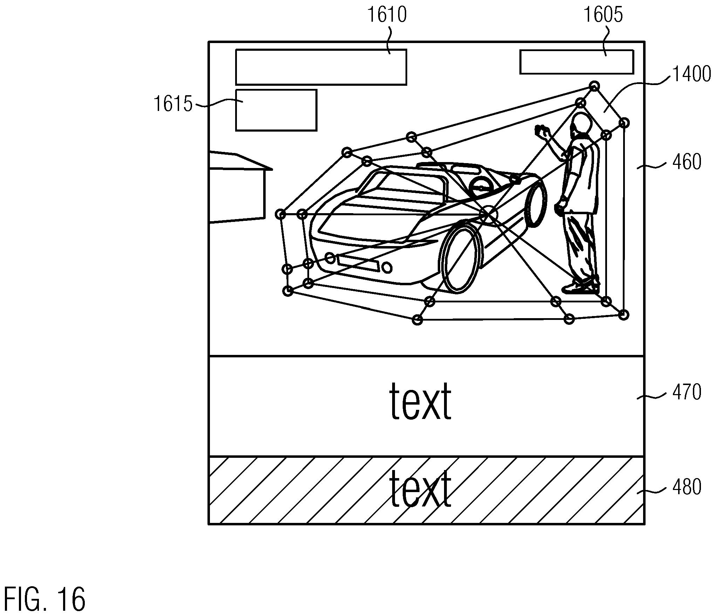

Optionally, and additionally referring to Figure 16, step 570 may be performed where elements 1505, 1510 and 1515 are defined within the scaled viewport 460, but outside the scaled second image section 1400. In an embodiment, if an element placed within the scaled viewport 460 (e.g. an element placed by a user) overlaps with the scaled second image section 1400, this element may be automatically shifted outside the scaled second image section 1400, but inside the scaled viewport 460. If this is not possible, the size of the element may be reduced or the placement of the element may be prevented. This ensures that the important parts of the image, which are inside the second image section, are not obscured by any element 1505, 1510 or 1515. Elements 1505, 1510 and 1515 may be any two dimensional objects such as text elements, images, graphical elements or a combination thereof.

Specifically, at step 570, an area may be defined within the scaled image 1310. This may, for instance be done by a user or automatically. If the defined area overlaps with the scaled second image section 1400 within the image 1310 scaled at 550, the defined area is automatically shifted within the image 1310 scaled at 550 to the outside of the scaled second image section 1400. The area may be shifted to the outside of the scaled second image section 1400, but to the inside of the scaled viewport 460. If this is not possible, the size of the defined area may be reduced or the generation of the area may be prevented. Finally, text, an image or any two-dimensional object may be inserted within the defined area.

While the invention has been described with respect to the physical embodiments constructed in accordance therewith, it will be apparent to those skilled in the art that various modifications, variations and improvements of the present invention may be made in the light of the above teachings and within the preview of the appended claims without departing from the scope of the invention. In addition, those areas in which it is believed that those of ordinary skill in the art are familiar have not been described therein in order to nor unnecessarily obscure the invention described therein. Accordingly, it is to be understood that the invention is not to be limited by the specific illustrative embodiments, but only the scope of the appended claims.

**Claims**

1. A computer-implemented method of adjusting an image (210) within a viewport (260) of an electronic document (250), the method comprising:

defining (530) a first image section (700) within the image;
defining (540) a second image section (1000) based on the defined first image section, the second image section comprising image content of the first image section; and
generating a scaled image (1310) comprising a scaled first image section and a scaled second image section by scaling (550) the image by a scaling factor, the scaling factor being based on a dimension of the second image section and on a dimension of the viewport,
wherein defining a first image section comprises defining a first non-self-intersecting polygon, the area confined by the first non-self-intersecting polygon being the first image section, **characterized in that** defining a second image section comprises:

determining a centroid (805) of the first image section;
for each vertex (610 to 655) of the first non-self-intersecting polygon, calculating a vector having a length, an origin, a terminal point and a direction, wherein the origin is the centroid of the first image section and the terminal point is the vertex;
for each calculated vector, defining an elongated vector associated with the calculated vector, the elongated vector having an origin, a length, a terminal point and a direction, the origin of the elongated vector corresponding to the origin of the calculated vector, the direction of the elongated vector corresponding to the direction of the calculated vector and the length of the elongated vector being greater than the length of the calculated vector; and
defining a second non-self-intersecting polygon, wherein locations of vertices (910 to 955) of the second non-self-intersecting polygon correspond to locations of terminal points of the elongated vectors, the second non-self-intersecting polygon being the second image section, and
wherein the method further comprises:

for each vertex of the scaled second non-self-intersecting polygon, calculating a distance from the vertex to a border of the scaled image;
determining a minimum distance from the calculated distances, and
shifting (560) the scaled image towards the border by a correction distance, the correction distance being based on the minimum distance and the scaling factor.

2. The method of claim 1, wherein the first image section is completely within the second image section.

3. The method of claims 1 to 2, wherein the scaling factor is a factor multiplied by a ratio of the dimension of the viewport to the dimension of the second image section.

4. The method of claim 1, wherein defining an elongated vector comprises elongating the length of the calculated vector by adding a value to the length of the calculated vector.

5. The method of claim 1, further comprising:

calculating a first differential dimension, the first differential dimension being a difference between the dimension of the viewport and a dimension of the scaled second image section;
calculating a second differential dimension, the second differential dimension being a difference between a dimension of the scaled image and a dimension of the scaled second image section;
calculating a second ratio, the second ratio being a ratio of the first differential dimension to the second differential dimension; and
calculating the correction distance, the correction distance being the scaling factor multiplied by the difference between the minimum distance and the minimum distance multiplied by the second ratio.

6. The method of one of claims 3 to 5, wherein the factor is greater than or equal to a ratio of a dimension of the second image section to a dimension of the image.

7. The method of one of claims 5 and 6, further comprising:

prior to defining the first image section, adapting (510) at least one dimension of a viewport of a template electronic document to at least one dimension of the image to result in the viewport of the electronic document;

and

inserting (520) the image within the viewport of the electronic document to result in the electronic document having the image within the viewport.

8. The method of one of claims 1 to 7, further comprising:

defining an area within the scaled image;
if the defined area overlaps with the scaled second image section, shifting the defined area within the scaled image to the outside of the scaled second image section; and
inserting text within the defined area.

9. A computer-readable medium having computer-executable instructions that, when executed by a computer, cause the computer to perform a method comprising:

defining (530) a first image section (700) within an image (210);
defining (540) a second image section (1000) based on the defined first image section, the second image section comprising image content of the first image section; and
generating a scaled image (1310) comprising a scaled first image section and a scaled second image section by scaling (550) the image by a scaling factor, the scaling factor being based on a dimension of the second image section and on a dimension of a viewport (260),
wherein defining a first image section comprises defining a first non-self-intersecting polygon, the area confined by the first non-self-intersecting polygon being the first image section, **characterized in that** defining a second image section comprises:

determining a centroid (805) of the first image section;
for each vertex (610 to 655) of the first non-self-intersecting polygon, calculating a vector having a length, an origin, a terminal point and a direction, wherein the origin is the centroid of the first image section and the terminal point is the vertex;
for each calculated vector, defining an elongated vector associated with the calculated vector, the elongated vector having an origin, a length, a terminal point and a direction, the origin of the elongated vector corresponding to the origin of the calculated vector, the direction of the elongated vector corresponding to the direction of the calculated vector and the length of the elongated vector being greater than the length of the calculated vector; and
defining a second non-self-intersecting polygon, wherein locations of vertices (910 to 955) of the second non-self-intersecting polygon correspond to locations of terminal points of the elongated vectors, the second non-self-intersecting polygon being the second image section, and
wherein the method further comprises:

for each vertex of the scaled second non-self-intersecting polygon, calculating a distance from the vertex to a border of the scaled image;
determining a minimum distance from the calculated distances, and
shifting (560) the scaled image towards the border by a correction distance, the correction distance being based on the minimum distance and the scaling factor.

10. The computer-readable medium of claim 9, further causing the computer to perform the method of one of claims 2 to 8.

11. A system adapted to:

define (530) a first image section (700) within an image;
define (540) a second image section (1000) based on the defined first image section, the second image section comprising image content of the first image section; and
generate a scaled image (1310) comprising a scaled first image section and a scaled second image section by scaling (550) the image by a scaling factor, the scaling factor being based on a dimension of the second image section and on a dimension of a viewport,
wherein defining a first image section comprises defining a first non-self-intersecting polygon, the area confined by the first non-self-intersecting polygon being the first image section, **characterized in that** defining a second image section comprises:

determining a centroid (805) of the first image section;

for each vertex (610 to 655) of the first non-self-intersecting polygon, calculating a vector having a length, an origin, a terminal point and a direction, wherein the origin is the centroid of the first image section and the terminal point is the vertex;

for each calculated vector, defining an elongated vector associated with the calculated vector, the elongated vector having an origin, a length, a terminal point and a direction, the origin of the elongated vector corresponding to the origin of the calculated vector, the direction of the elongated vector corresponding to the direction of the calculated vector and the length of the elongated vector being greater than the length of the calculated vector; and

defining a second non-self-intersecting polygon, wherein locations of vertices (910 to 955) of the second non-self-intersecting polygon correspond to locations of terminal points of the elongated vectors, the second non-self-intersecting polygon being the second image section, and

wherein the the system is further adapted to:

for each vertex of the scaled second non-self-intersecting polygon, calculate a distance from the vertex to a border of the scaled image;
determine a minimum distance from the calculated distances, and
shift (560) the scaled image towards the border by a correction distance, the correction distance being based on the minimum distance and the scaling factor.

**12.** The system of claim 11, further being adapted to perform the method of one of claims 2 to 8.

### Patentansprüche

**1.** Computerimplementiertes Verfahren zur Justierung eines Bildes (210) innerhalb eines Darstellungsfeldes (260) eines elektronischen Dokuments (250), wobei das Verfahren umfasst:

Festlegen (530) eines ersten Bildabschnitts (700) in dem Bild;
Festlegen (540) eines zweiten Bildabschnitts (1000) auf der Grundlage des festgelegten ersten Bildabschnitts, wobei der zweite Bildabschnitt einen Bildinhalt des ersten Bildabschnitts enthält; und
Erzeugen eines skalierten Bildes (1310) mit einem skalierten ersten Bildabschnitt und einem skalierten zweiten Bildabschnitt durch Skalierung (550) des Bildes mit einem Skalierungsfaktor, wobei der Skalierungsfaktor auf einer Abmessung des zweiten Bildabschnitts und einer Abmessung des Darstellungsfeldes beruht,
wobei Festlegen eines ersten Bildabschnitts umfasst: Festlegen eines ersten nicht-selbstschneidenden Polygons, wobei die Fläche, die von dem ersten nicht-selbstschneidenden Polygon eingeschlossen ist, der erste Bildabschnitts ist,
**dadurch gekennzeichnet, dass**
Festlegen eines zweiten Bildabschnitts umfasst: Ermitteln eines Schwerpunkts (805) des ersten Bildabschnitts;
für jeden Eckpunkt (610 bis 655) des ersten nicht-selbstschneidenden Polygons, Berechnen eines Vektors mit einer Länge, einem Ursprung, einem Endpunkt und einer Richtung, wobei der Ursprung der Schwerpunkt des ersten Bildabschnitts und der Endpunkt der Eckpunkt ist;
für jeden berechneten Vektor, Festlegen eines verlängerten Vektors, der dem berechneten Vektor zugeordnet ist, wobei der verlängerte Vektor einen Ursprung, eine Länge, einen Endpunkt und eine Richtung hat, wobei der Ursprung des verlängerten Vektors dem Ursprung des berechneten Vektors entspricht, die Richtung des verlängerten Vektors der Richtung des berechneten Vektors entspricht und die Länge des verlängerten Vektors größer als die Länge des berechneten Vektors ist; und
Festlegen eines zweiten nicht-selbstschneidenden Polygons, wobei Positionen von Eckpunkten (910 bis 955) des zweiten nicht-selbstschneidenden Polygons Positionen von Endpunkten der verlängerten Vektoren entsprechen, wobei das zweite nicht-selbstschneidende Polygon der zweite Bildabschnitt ist, und
wobei das Verfahren ferner umfasst:

für jeden Eckpunkt des skalierten zweiten nicht-selbstschneidende Polygons, Berechnen eines Abstands von dem Eckpunkt zu einer Grenze des skalierten Bildes;
Ermitteln eines minimalen Abstands aus den berechneten Abständen, und
Verschieben (560) des skalierten Bildes in Richtung zu der Grenze entsprechend einem Korrekturabstand, wobei der Korrekturabstand auf dem minimalen Abstand und dem Skalierungsfaktor beruht.

**2.** Verfahren nach Anspruch 1, wobei der erste Bildabschnitt vollständig innerhalb des zweiten Bildabschnitts liegt.

**3.** Verfahren nach Anspruch 1 oder 2, wobei der Skalierungsfaktor ein Faktor ist, der mit einem Verhältnis der Abmessung des Darstellungsfeldes zu der Abmessung des zweiten Bildabschnitts multipliziert wird.

**4.** Verfahren nach Anspruch 1, wobei Festlegen eines verlängerten Vektors umfasst: Verlängern der Länge des berechneten Vektors durch Addieren eines Wertes zu der Länge des berechneten Vektors.

**5.** Verfahren nach Anspruch 1, das ferner umfasst:

Berechnen einer ersten Differenzabmessung, wobei die erste Differenzabmessung eine Differenz zwischen der Abmessung des Darstellungsfeldes und einer Abmessung des skalierten zweiten Bildabschnitts ist;
Berechnen einer zweiten Differenzabmessung, wobei die zweite Differenzabmessung eine Differenz zwischen einer Abmessung des skalierten Bildes und einer Abmessung des skalierten zweiten Bildabschnitts ist;
Berechnen eines zweiten Verhältnisses, wobei das zweite Verhältnis ein Verhältnis der ersten Differenzabmessung zu der zweiten Differenzabmessung ist; und
Berechnen des Korrekturabstands, wobei der Korrekturabstand der Skalierungsfaktor multipliziert mit der Differenz zwischen dem minimalen Abstand und dem minimalen Abstand multipliziert mit dem zweiten Verhältnis ist.

**6.** Verfahren nach einem der Ansprüche 3 bis 5, wobei der Faktor größer oder gleich einem Verhältnis einer Abmessung des zweiten Bildabschnitts zu einer Abmessung des Bildes ist.

**7.** Verfahren nach einem der Ansprüche 5 oder 6, das ferner umfasst:

vor dem Festlegen des ersten Bildabschnitts, Anpassen (510) mindestens einer Abmessung eines Darstellungsfeldes einer elektronischen Dokumentenschablone an mindestens eine Abmessung des Bildes derart, dass das Darstellungsfeld des elektronischen Dokuments erhalten wird; und
Einfügen (520) des Bildes in das Darstellungsfeld des elektronischen Dokuments derart, dass als Ergebnis das Bild in dem Darstellungsfeld in dem elektronischen Dokument liegt.

**8.** Verfahren nach einem der Ansprüche 1 bis 7, das ferner umfasst:

Festlegen eines Bereichs innerhalb des skalierten Bildes;
wenn der festgelegte Bereich mit dem skalierten zweiten Bildabschnitt überlappt, Verschieben des festgelegten Bereichs innerhalb des skalierten Bildes von dem skalierten zweiten Bildabschnitt nach außen; und
Einfügen von Text in den festgelegten Bereich.

**9.** Computerlesbares Medium mit von einem Computer ausführbaren Befehlen, die bei Ausführung durch einen Computer bewirken, dass der Computer ein Verfahren ausführt, mit:

Festlegen (530) eines ersten Bildabschnitts (700) in einem Bild (210);
Festlegen (540) eines zweiten Bildabschnitts (1000) auf der Grundlage des festgelegten ersten Bildabschnitts, wobei der zweite Bildabschnitt einen Bildinhalt des ersten Bildabschnitts enthält; und
Erzeugen eines skalierten Bildes (1310) mit einem skalierten ersten Bildabschnitt und einem skalierten zweiten Bildabschnitt durch Skalierung (550) des Bildes mit einem Skalierungsfaktor, wobei der Skalierungsfaktor auf einer Abmessung des zweiten Bildabschnitts und einer Abmessung des Darstellungsfeldes (260) beruht,
wobei Festlegen eines ersten Bildabschnitts umfasst: Festlegen eines ersten nicht-selbstschneidenden Polygons, wobei die Fläche, die von dem ersten nicht-selbstschneidenden Polygon eingeschlossen ist, der erste Bildabschnitts ist,
**dadurch gekennzeichnet, dass**
Festlegen eines zweiten Bildabschnitts umfasst: Ermitteln eines Schwerpunkts (805) des ersten Bildabschnitts;
für jeden Eckpunkt (610 bis 655) des ersten nicht-selbstschneidenden Polygons, Berechnen eines Vektors mit einer Länge, einem Ursprung, einem Endpunkt und einer Richtung, wobei der Ursprung der Schwerpunkt des ersten Bildabschnitts und der Endpunkt der Eckpunkt ist;
für jeden berechneten Vektor, Festlegen eines verlängerten Vektors, der dem berechneten Vektor zugeordnet ist, wobei der verlängerte Vektor einen Ursprung, eine Länge, einen Endpunkt und eine Richtung hat, wobei der Ursprung des verlängerten Vektors dem Ursprung des berechneten Vektors entspricht, die Richtung des verlängerten Vektors der Richtung des berechneten Vektors entspricht und die Länge des verlängerten Vektors größer als die Länge des berechneten Vektors ist; und

Festlegen eines zweiten nicht-selbstschneidenden Polygons, wobei Positionen von Eckpunkten (910 bis 955) des zweiten nicht-selbstschneidende Polygons Positionen von Endpunkten der verlängerten Vektoren entsprechen, wobei das zweite nicht-selbstschneidende Polygon der zweite Bildabschnitt ist, und

wobei das Verfahren ferner umfasst:

für jeden Eckpunkt des skalierten zweiten nicht-selbstschneidende Polygons, Berechnen eines Abstands von dem Eckpunkt zu einer Grenze des skalierten Bildes;

Ermitteln eines minimalen Abstands aus den berechneten Abständen, und

Verschieben (560) des skalierten Bildes in Richtung zu der Grenze entsprechend einem Korrekturabstand, wobei der Korrekturabstand auf dem minimalen Abstand und dem Skalierungsfaktor beruht.

10. Computerlesbares Medium nach Anspruch 9, wobei ferner bewirkt wird, dass der Computer das Verfahren nach einem der Ansprüche 2 bis 8 ausführt.

11. Ein System, das ausgebildet ist zum:

Festlegen (530) eines ersten Bildabschnitts (700) in einem Bild;

Festlegen (540) eines zweiten Bildabschnitts (1000) auf der Grundlage des festgelegten ersten Bildabschnitts, wobei der zweite Bildabschnitt einen Bildinhalt des ersten Bildabschnitts enthält; und

Erzeugen eines skalierten Bildes (1310) mit einem skalierten ersten Bildabschnitt und einem skalierten zweiten Bildabschnitt durch Skalierung (550) des Bildes mit einem Skalierungsfaktor, wobei der Skalierungsfaktor auf einer Abmessung des zweiten Bildabschnitts und einer Abmessung des Darstellungsfeldes beruht,

wobei Festlegen eines ersten Bildabschnitts umfasst: Festlegen eines ersten nicht-selbstschneidenden Polygons, wobei die Fläche, die von dem ersten nicht-selbstschneidenden Polygon eingeschlossen ist, der erste Bildabschnitts ist,

**dadurch gekennzeichnet, dass**

Festlegen eines zweiten Bildabschnitts umfasst: Ermitteln eines Schwerpunkts (805) des ersten Bildabschnitts;

für jeden Eckpunkt (610 bis 655) des ersten nicht-selbstschneidenden Polygons, Berechnen eines Vektors mit einer Länge, einem Ursprung, einem Endpunkt und einer Richtung, wobei der Ursprung der Schwerpunkt des ersten Bildabschnitts und der Endpunkt der Eckpunkt ist;

für jeden berechneten Vektor, Festlegen eines verlängerten Vektors, der dem berechneten Vektor zugeordnet ist, wobei der verlängerte Vektor einen Ursprung, eine Länge, einen Endpunkt und eine Richtung hat, wobei der Ursprung des verlängerten Vektors dem Ursprung des berechneten Vektors entspricht, die Richtung des verlängerten Vektors der Richtung des berechneten Vektors entspricht und die Länge des verlängerten Vektors größer als die Länge des berechneten Vektors ist; und

Festlegen eines zweiten nicht-selbstschneidenden Polygons, wobei Positionen von Eckpunkten (910 bis 955) des zweiten nicht-selbstschneidenden Polygons Positionen von Endpunkten der verlängerten Vektoren entsprechen, wobei das zweite nicht-selbstschneidende Polygon der zweite Bildabschnitt ist, und

wobei das System ferner ausgebildet ist, um:

für jeden Eckpunkt des skalierten zweiten nicht-selbstschneidende Polygons einen Abstand von dem Eckpunkt zu einer Grenze des skalierten Bildes zu berechnen;

einen minimalen Abstand aus den berechneten Abständen zu ermitteln, und

das skalierte Bild in Richtung zu der Grenze entsprechend einem Korrekturabstand zu verschieben (560), wobei der Korrekturabstand auf dem minimalen Abstand und dem Skalierungsfaktor beruht.

12. System nach Anspruch 11, das ferner ausgebildet ist zum Ausführen des Verfahrens nach einem der Ansprüche 2 bis 8.

**Revendications**

1. Procédé, mis en oeuvre sur ordinateur, d'ajustement d'une image (210) à l'intérieur d'une fenêtre d'affichage (260) d'un document électronique (250), le procédé comprenant :

la définition (530) d'une première section d'image (700) à l'intérieur de l'image,

la définition (540) d'une seconde section d'image (1000) fondée sur la première section d'image définie, la seconde section d'image comprenant le contenu d'image de la première section d'image, et

la génération d'une image mise à l'échelle (1310) comprenant une première section d'image mise à l'échelle et une seconde section d'image mise à l'échelle en redimensionnant (550) l'image par un facteur d'échelle, le facteur d'échelle étant fondé sur une dimension de la seconde section d'image et sur une dimension de la fenêtre d'affichage,

dans lequel la définition d'une première section d'image comprend la définition d'un premier polygone ne se coupant pas lui-même, la zone confinée par le premier polygone ne se coupant pas lui-même représentant la première section d'image,

**caractérisé en ce que** la définition d'une seconde section d'image comprend la détermination du centre de gravité (805) de la première section d'image,

pour chaque sommet (610 à 655) du premier polygone ne se coupant pas lui-même, le calcul d'un vecteur comportant une longueur, une origine, un point final et une direction, l'origine étant le centre de gravité de la première section d'image et le point final étant le sommet,

pour chaque vecteur calculé, la définition d'un vecteur allongé associé au vecteur calculé, le vecteur allongé comportant une origine, une longueur, un point final et une direction, l'origine du vecteur allongé correspondant à l'origine du vecteur calculé, la direction du vecteur allongé correspondant à la direction du vecteur calculé et la longueur du vecteur allongé étant supérieure à la longueur du vecteur calculé, et

la définition d'un second polygone ne se coupant pas lui-même, les emplacements des sommets (910 à 955) du second polygone ne se coupant pas lui-même correspondant aux emplacements des points finaux des vecteurs allongés, le second polygone ne se coupant pas lui-même représentant la seconde section d'image, et

le procédé comprenant en outre :

> pour chaque sommet du second polygone ne se coupant pas lui-même redimensionné, le calcul d'une distance allant du sommet à la limite de l'image mise à l'échelle,
>
> la détermination d'une distance minimale à partir des distances calculées, et
>
> le décalage (560) vers la limite de l'image mise à l'échelle d'une certaine distance de correction, la distance de correction étant fondée sur la distance minimale et sur le facteur d'échelle.

2. Procédé selon la revendication 1, dans lequel la première section d'image se trouve entièrement à l'intérieur de la seconde section d'image.

3. Procédé selon la revendication 1 ou la revendication 2, dans lequel le facteur d'échelle est un facteur multiplié par le rapport de la dimension de la fenêtre d'affichage sur la dimension de la seconde section d'image.

4. Procédé selon la revendication 1, dans lequel la définition d'un vecteur allongé comprend l'allongement de la longueur du vecteur calculé en ajoutant une valeur à la longueur du vecteur calculé.

5. Procédé selon la revendication 1, comprenant en outre :

> le calcul d'une première dimension différentielle, la première dimension différentielle représentant la différence entre la dimension de la fenêtre d'affichage et une dimension de la seconde section d'image mise à l'échelle,
>
> le calcul d'une seconde dimension différentielle, la seconde dimension différentielle représentant la différence entre une dimension de l'image mise à l'échelle et une dimension de la seconde section d'image mise à l'échelle,
>
> le calcul d'un second rapport, le second rapport étant le rapport de la première dimension différentielle sur la seconde dimension différentielle, et
>
> le calcul de la distance de correction, la distance de correction étant le facteur d'échelle multiplié par la différence entre la distance minimale et la distance minimale multipliée par le second rapport.

6. Procédé selon l'une des revendications 3 à 5, dans lequel le facteur est supérieur ou égal au rapport d'une dimension de la seconde section d'image sur une dimension de l'image.

7. Procédé selon l'une des revendications 5 et 6, comprenant en outre :

> l'adaptation (510), avant de définir la première section d'image, d'au moins une dimension d'une fenêtre d'affichage d'un document électronique formant modèle à une dimension de l'image pour que cela résulte en la fenêtre d'affichage du document électronique, et
>
> l'insertion (520) de l'image à l'intérieur de la fenêtre d'affichage du document électronique pour que cela résulte en le document électronique comportant l'image à l'intérieur de la fenêtre d'affichage.

EP 3 107 071 B1

**8.** Procédé selon l'une des revendications 1 à 7, comprenant en outre :

la définition d'une zone à l'intérieur de l'image mise à l'échelle,
si la zone définie se chevauche avec la seconde section d'image mise à l'échelle, le décalage de la zone définie à l'intérieur de l'image mise à l'échelle vers l'extérieur de la seconde section d'image mise à l'échelle, et
l'insertion de texte à l'intérieur de la zone définie

**9.** Support pouvant être lu par ordinateur comportant des instructions exécutables par ordinateur qui, lorsqu'elles sont exécutées par un ordinateur, amènent l'ordinateur à réaliser le procédé comprenant :

la définition (530) d'une première section d'image (700) à l'intérieur d'une image (210),
la définition (540) d'une seconde section d'image (1000) fondée sur la première section d'image définie, la seconde section d'image comprenant le contenu d'image de la première section d'image, et
la génération d'une image mise à l'échelle (1310) comprenant une première section d'image mise à l'échelle et une seconde section d'image mise à l'échelle en redimensionnant (550) l'image par un facteur d'échelle, le facteur d'échelle étant fondé sur une dimension de la seconde section d'image et sur une dimension d'une fenêtre d'affichage (260),
dans lequel la définition d'une première section d'image comprend la définition d'un premier polygone ne se coupant pas lui-même, la zone confinée par le premier polygone ne se coupant pas lui-même représentant la première section d'image,
**caractérisé en ce que** la définition d'une seconde section d'image comprend :

la détermination du centre de gravité (805) de la première section d'image,
pour chaque sommet (610 à 655) du premier polygone ne se coupant pas lui-même, le calcul d'un vecteur comportant une longueur, une origine, un point final et une direction, l'origine étant le centre de gravité de la première section d'image et le point final étant le sommet,
pour chaque vecteur calculé, la définition d'un vecteur allongé associé au vecteur calculé, le vecteur allongé comportant une origine, une longueur, un point final et une direction, l'origine du vecteur allongé correspondant à l'origine du vecteur calculé, la direction du vecteur allongé correspondant à la direction du vecteur calculé et la longueur du vecteur allongé étant supérieure à la longueur du vecteur calculé, et
la définition d'un second polygone ne se coupant pas lui-même, les emplacements des sommets (910 à 955) du second polygone ne se coupant pas lui-même correspondant aux emplacements des points finaux des vecteurs allongés, le second polygone ne se coupant pas lui-même représentant la seconde section d'image, et
le procédé comprenant en outre :

pour chaque sommet du second polygone ne se coupant pas lui-même redimensionné, le calcul d'une distance allant du sommet à la limite de l'image mise à l'échelle,
la détermination d'une distance minimale à partir des distances calculées, et
le décalage (560) vers la limite de l'image mise à l'échelle d'une certaine distance de correction, la distance de correction étant fondée sur la distance minimale et sur le facteur d'échelle.

**10.** Support pouvant être lu par ordinateur selon la revendication 9, amenant en outre l'ordinateur à réaliser le procédé conforme à l'une des revendications 2 à 8.

**11.** Système conçu pour :

définir (530) une première section d'image (700) à l'intérieur de l'image,
définir (540) une seconde section d'image (1000) fondée sur la première section d'image définie, la seconde section d'image comprenant le contenu d'image de la première section d'image, et
générer une image mise à l'échelle (1310) comprenant une première section d'image mise à l'échelle et une seconde section d'image mise à l'échelle en redimensionnant (550) l'image par un facteur d'échelle, le facteur d'échelle étant fondé sur une dimension de la seconde section d'image et sur une dimension de la fenêtre d'affichage,
dans lequel la définition d'une première section d'image comprend la définition d'un premier polygone ne se coupant pas lui-même, la zone confinée par le premier polygone ne se coupant pas lui-même représentant la première section d'image,
**caractérisé en ce que** la définition d'une seconde section d'image comprend la détermination du centre de gravité (805) de la première section d'image,

pour chaque sommet (610 à 655) du premier polygone ne se coupant pas lui-même, le calcul d'un vecteur comportant une longueur, une origine, un point final et une direction, l'origine étant le centre de gravité de la première section d'image et le point final étant le sommet,

pour chaque vecteur calculé, la définition d'un vecteur allongé associé au vecteur calculé, le vecteur allongé comportant une origine, une longueur, un point final et une direction, l'origine du vecteur allongé correspondant à l'origine du vecteur calculé, la direction du vecteur allongé correspondant à la direction du vecteur calculé et la longueur du vecteur allongé étant supérieure à la longueur du vecteur calculé, et

la définition d'un second polygone ne se coupant pas lui-même, les emplacements des sommets (910 à 955) du second polygone ne se coupant pas lui-même correspondant aux emplacements des points finaux des vecteurs allongés, le second polygone ne se coupant pas lui-même représentant la seconde section d'image, et le système étant en outre conçu pour :

calculer une distance allant du sommet à la limite de l'image mise à l'échelle, pour chaque sommet du second polygone ne se coupant pas lui-même redimensionné,

déterminer une distance minimale à partir des distances calculées, et

décaler (560) vers la limite l'image mise à l'échelle d'une certaine distance de correction, la distance de correction étant fondée sur la distance minimale et sur le facteur d'échelle.

12. Système selon la revendication 11, étant en outre conçue pour réaliser le procédé conforme à l'une des revendications 2 à 8.

FIG. 1a

EP 3 107 071 B1

FIG. 1b

FIG. 2

FIG. 3a

FIG. 3b

FIG. 4

500

Start

Scaling a viewport of a template
electronic document ~510

Placing an image within the scaled viewport ~520

Defining a first image section within the image ~530

Defining a second image section based
on the first image section ~540

Scaling the image based on a dimension of
the second image section and on a dimension
of the scaled viewport ~550

Shifting the scaled image with respect to the
scaled viewport such that the centroid of the
shifted scaled image does not correspond
to the centroid of the scaled viewport ~560

Placing text elements outside the second
image section ~570

End

FIG. 5

FIG. 6

FIG. 7

FIG. 8

EP 3 107 071 B1

FIG. 9

FIG. 10

FIG. 11

FIG. 12b

FIG. 12a

EP 3 107 071 B1

FIG. 12c

FIG. 12d

FIG. 13a

FIG. 13b

FIG. 14

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7908284 B1